# EUROPÄISCHE PATENTANMELDUNG

(11) **EP 2 130 884 A1**
(43) Veröffentlichungstag der Anmeldung: **09.12.2009**
(21) Anmeldenummer: 08010026.6
(22) Anmeldetag: 02.06.2008
(51) Int. Cl.: C09J 7/00

(54) **Sicherheitsetikett oder -klebeband**

(71) Anmelder: Hueck Folien Ges.m.b.H., 4342 Baumgartenberg (AT)
(72) Erfinder: Hillburger, Johann, 92712 Pirk (DE)
(74) Vertreter: Landgraf, Elvira

(57) **Zusammenfassung**

Die Erfindung betrifft ein Sicherheitsetikett oder- klebeband mit Manipulationsnachweis aufweisend ein flexibles Trägersubstrat auf Basis einer flexiblen Kunststofffolie, **dadurch gekennzeichnet, dass** auf das Trägersubstrat folgende Schichten aufgebracht sind:
a) partiell ein Trennlack in Form von Buchstaben, Zeichen, Symbolen, Linien, Guillochen, Zahlen oder Schriftzügen,
b) anschließend eine vollflächige oder partielle Beschichtung aus lumineszierenden Farben
c) gegebenenfalls eine oder mehrere weitere Schichten mit optischen Merkmalen oder metallische Schichten
d) eine Selbstklebebeschichtung oder eine Heißsiegelklebebeschichtung.

## Beschreibung

Die Erfindung betrifft ein Sicherheitsetikett oder- klebeband mit Manipulationsnachweis, bei dem bei Ablösen des Etiketts vom zu sichernden Gegenstand oder der zu sichernden Verpackung ein verborgenes optisches Element sichtbar wird.

Aus der DE 100 22 002 A1 ist ein Sicherheitsklebeband zum Nachweis des unbefugten Öffnens einer Verpackung bekannt. Das mehrschichtige Klebeband weist einen Träger auf Basis einer gereckten Thermoplastfolie auf, dessen obere Seite gegebenenfalls mit einer Trennlackierung beschichtet ist und auf dessen unterer Seite folgende Schichten aufgebracht sind:
a) eine nicht vollflächig aufgetragene Primerschicht, wobei die Primerschicht sehr gut auf der Thermoplastfolie verankert ist,
b) eine vollflächig über die aufgetragene Primerschicht und die freie Thermoplastfolienoberfläche aufgetragene Trennschicht, wobei die Trennschicht besser auf der Primerschicht verankert als auf der Thermoplastfolie und
c) eine vollflächig auf die Trennschicht aufgetragene Haftklebemasse, die auf der Trennschicht besser verankert ist als die Trennschicht auf der Thermoplastfolie.
Dabei wird eine Primerschicht aufgebracht und anschließend eine Schicht, die keine Haftung zur Trägerfolie aufweist.

Nachteil dieses Aufbaus ist, dass das abgezogene Klebeband immer noch klebrig ist, da die Klebeschicht nach Abzug außen liegt.

Aufgabe der Erfindung war es ein Sicherheitsetikett oder- klebeband mit Manipulationsnachweis bereitzustellen, bei dem bei Ablösen des Etiketts ein verborgenes optisches Element sichtbar wird, das auch auf wenig spaltfesten Materialien, wie Papier oder Pappe einwandfrei funktionsfähig ist.

Gegenstand der Erfindung ist daher ein Sicherheitsetikett oder- klebeband mit Manipulationsnachweis aufweisend ein flexibles Trägersubstrat auf Basis einer flexiblen Kunststofffolie, **dadurch gekennzeichnet, dass** auf das Trägersubstrat folgende Schichten aufgebracht sind:
a) partiell ein Trennlack in Form von Buchstaben, Zeichen, Symbolen, Linien, Guillochen, Zahlen oder Schriftzügen,
b) anschließend eine vollflächige oder partielle Beschichtung aus lumineszierenden Farben
c) gegebenenfalls eine oder mehrere weitere Schichten mit optischen Merkmalen oder metallische Schichten
d) eine Selbstklebebeschichtung oder eine Heißklebebeschichtung.

Als Trägersubstrat kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, Fluorpolymere, wie Teflon und dergleichen in Frage. Die Trägerfolien weisen vorzugsweise eine Dicke von 5 - 700 µm, bevorzugt 5 - 200 µm, besonders bevorzugt 5 - 100 µm auf.

Gegebenenfalls kann die Trägerfolie ein optisch aktives Element, wie eine Beugungsstruktur, ein Hologramm oder Waves aufweisen.

Die Trennlackbeschichtung a) wird in Form von Buchstaben, Zeichen, Symbolen, Linien, Guillochen, Zahlen oder Schriftzügen aufgebracht.

Es kommen insbesondere bekannte, schlecht haftende Lackzusammensetzungen, beispielsweise auf Basis von Cylcloolefincopolymeren, Nitrocellulose, Acrylaten, Polyvinylchlorid, Ethylenacrylatcopolymeren oder Styrolacrylaten in einem geeigneten Lösungsmittel in Frage. Zur Einstellung der Haftung werden dabei vorzugsweise chlorierte Polyolefine zugesetzt. Der Anteil der chlorierten Polyolefine in der Zusammensetzung kann 20 bis 130 Gew% im Verhältnis zum Basispolymer betragen.
Ferner können auch sehr dünn aufgetragene Polyamid-, Polyethylen-, Fluorpolymerwachsschichten oder Silikonbeschichtungen als Trennlackschicht verwendet werden.

Die Aufbringung des Trennlacks kann durch ein beliebiges Verfahren, beispielsweise durch Tiefdruck, Flexodruck, Siebdruck, Digitaldruck und dergleichen erfolgen.

Auf diese Schicht wird eine partielle oder vollflächige Schicht aus lumineszierenden Lacken oder Farben aufgebracht.
Innerhalb der vollflächigen oder partiellen Schicht können unterschiedliche lumineszierende Farben verwendet werden. So können beispielsweise definierte Farbfolgen, beispielweise Regenbogenfarbfolgen und dergleichen verwendet werden.
Es kann aber auch eine einzige Farbe oder es können verschiedene voneinander abgegrenzte Farbbereiche aufgebracht sein.

Die Aufbringung der lumineszierenden Schicht kann durch ein beliebiges Verfahren, beispielsweise durch Tiefdruck, Flexodruck, Siebdruck, Digitaldruck und dergleichen erfolgen.

In einer besonderen Ausführungsform können auch weitere farbige, transparente oder metallische Schichten c) aufgebracht sein.

Die optischen Eigenschaften der Schicht, insbesondere die Farben lassen sich durch sichtbare Farbstoffe bzw. Pigmente, ggf. auch weitere lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind in allen möglichen Kombinationen einsetzbar. Zusätzlich können auch phosphoreszierende Pigmente allein oder in Kombination mit anderen Farbstoffen und/oder Pigmenten eingesetzt werden.
Als Pigmente können alle bekannten Pigmente, beispielsweise Pigmente auf anorganischer Basis, wie Titandioxid, Zinksulfid, Kaolin, ITO, ATO, FTO, Aluminium, Chrom- und Siliciumoxide oder Pigmente auf organischer Basis, wie Phthalocyaninblau, i-Indolidingelb, Dioxazinviolett und dergleichen als auch farbige und/oder verkapselte Pigmente in chemisch, physikalisch oder reaktiv trocknenden Bindemittelsystemen verwendet werden. Als Farbstoffe kommen beispielsweise 1,1- oder 1,2- Chrom-Cobalt-Komplexe in Frage.
Diese Schicht kann aber auch einen definierten Farbverlauf aufweisen.

Die Aufbringung der farbigen Schicht kann durch ein beliebiges Verfahren, beispielsweise durch Tiefdruck, Flexodruck, Siebdruck, Digitaldruck und dergleichen erfolgen.

Eine metallische Schicht kann aus einem Metall, einer Metallverbindung oder einer Legierung bestehen. Als Metallschicht sind Schichten aus AI, Cu, Fe, Ag, Au, Cr, Ni, Zn und dergleichen geeignet. Als Metallverbindungen sind beispielsweise Oxide oder Sulfide von Metallen, insbesondere TiO₂, Cr-Oxide, ZnS, ITO, ATO, FTO, ZnO, AI₂O₃ oder Siliciumoxide geeignet. Geeignete Legierungen sind beispielsweise Cu-Al Legierungen, Cu-Zn Legierungen und dergleichen.

Die metallische Schicht kann durch einen PVD- oder CVD- Prozess (Sputtern, Bedampfen), durch Galvanisieren, aber auch durch jedes bekannte Druckverfahren, beispielsweise durch Tiefdruck, Flexodruck, Siebdruck, Digitaldruck aufgebracht werden.

Durch die Überlagerungen der Schicht b) und der gegebenenfalls vorhandenen Schicht c) können individuelle optische Effekte durch, je nach eingesetzter Beschichtung c), subtraktive oder additive Farbmischung erzielt werden.

Anschließend wird eine Selbstklebebeschichtung oder eine Heißklebebeschichtung d) auf diesen Schichtaufbau aufgebracht.
Selbstklebebeschichtungen bestehen beispielsweise aus Polymeren, wie Acrylate und dergleichen. Es können aber auch bekannte Heißsiegelklebebeschichtungen aufgebracht werden. Mit Hilfe dieser Klebebeschichtung wird das Sicherheitsetikett oder - klebeband auf den zu sichernden Gegenstand oder auf die zu sichernde Verpackung aufgebracht.

In einer besonderen Ausführungsform kann unter oder über der Trennlackschicht auch ein UV-Blocker aufgebracht sein, vorzugsweise im Register mit der lumineszierenden Schicht b) bzw. auch mit einer als fluoreszierende Schicht ausgeführte Schicht c).
In diesem Fall ist die lumineszierende Schicht im ursprünglichen Zustand von außen nicht erkennbar, was besonders vorteilhaft ist.

Nach Auslösen des Sicherheitsmerkmals (Abziehen der Folie) bleibt an jenen Stellen, an denen die Trennschicht a) vorhanden ist, die in diesem Bereich vorhandene Schicht b) auf dem Substrat (dem zu sichernden Gegenstand), in den nicht der Trennschicht versehenen Bereichen wird diese Schicht mit abgezogen.

Im korrespondierenden Teil der Folie sieht man unter UV-Licht die lumineszierende Beschichtung, im komplementären Bereich ist die lumineszierende Beschichtung auf dem zu sichernden Gegenstand verblieben.

Die erfindungsgemäßen Sicherheitsfolien können in konfektionierter Form als Etiketten in beliebiger Form (eckig, rund, oval etc.) oder als Klebebänder zur Sicherung von Gegenständen oder Verpackungen verwendet werden.

## Patentansprüche

1. Sicherheitsetikett oder- klebeband mit Manipulationsnachweis aufweisend ein flexibles Trägersubstrat auf Basis einer flexiblen Kunststofffolie, **dadurch gekennzeichnet, dass** auf das Trägersubstrat folgende Schichten aufgebracht sind:
a) partiell ein Trennlack in Form von Buchstaben, Zeichen, Symbolen, Linien, Guillochen, Zahlen oder Schriftzügen,
b) anschließend eine vollflächige oder partielle Beschichtung aus lumineszierenden Farben
c) gegebenenfalls eine oder mehrere weitere Schichten mit optischen Merkmalen oder metallische Schichten
d) eine Selbstklebebeschichtung oder eine Heißsiegellackbeschichtung

2. Sicherheitsetikett oder -klebeband nach Anspruch 1, **dadurch gekennzeichnet, dass** unter oder über der Schicht a) eine UV-Blockerschicht aufgebracht ist.

3. Sicherheitsetikett oder -klebeband nach einem der Ansprüche 1 oder 2, **dadurch gekennzeichnet, dass** das Trägersubstrat eine optisch aktive Struktur, wie Beugungsstrukturen, Hologramme oder Waves aufweist.

4. Sicherheitsetikett oder -klebeband nach einem der Ansprüche 1 bis 3, **dadurch gekennzeichnet, dass** die partielle lumineszierende Beschichtung in Form vom Buchstaben, Zeichen, Symbolen, Linien, Guillochen, Zahlen oder Schriftzügen vorliegt.

5. Verwendung als Sicherheitsetiketts oder -klebebands nach einem der Ansprüche 1 bis 4 zur Sicherung von Gegenständen oder Verpackungen.
